# NEW EUROPEAN PATENT SPECIFICATION

(11) **EP 2 138 034 B2**
(45) Date of publication and mention of the opposition decision: **05.07.2017**
(45) Mention of the grant of the patent: 07.08.2013
(21) Application number: 09075231.2
(22) Date of filing: 18.05.2009
(51) Int. Cl.: A01J 7/04

(54) **Teat cleaning method and teat cleaning device and an automatic milking device**
Zitzenreinigungsverfahren und Zitzenreinigungsvorrichtung und automatische Melkvorrichtung
Procédé de nettoyage de tétine et dispositif de nettoyage de tétine et dispositif de traite automatique

(30) Priority: 26.06.2008 NL 1035633
(43) Date of publication of application: 30.12.2009
(73) Proprietor: Lely Patent N.V., 3147 PB Maassluis (NL)
(72) Inventor: van 't Land, Aart, 4411 RV Rilland (NL)
(74) Representative: Octrooibureau Van der Lely N.V.

(56) References cited:
- EP-A1- 0 945 055
- WO-A-2004/004791
- WO-A1-02/07505
- WO-A1-99/03331
- WO-A1-99/05904
- WO-A1-03/077645
- US-A- 5 678 506
- US-A1- 2004 025 802
- US-B1- 6 276 297
- US-B1- 6 550 420
- US-B1- 6 626 130
- Research Disclosure, publication No. 444037, p.530, April 2000

## Description

The invention relates to a method of cleaning teats of a dairy animal. In particular, the invention relates to a method of cleaning teats of a dairy animal by means of an automatic teat cleaning device controllable by a control device, wherein each of the teats is successively cleaned by means of the teat cleaning device, and wherein a health condition of each of the teats is determined, in particular whether a teat has a contagious infection.

From the state of the art the document EP 1109438 is known, which shows a device and a method of the type mentioned in the preamble. In this case, a teat cleaning sequence is determined on the basis of the health condition. First, one or more healthy teats are cleaned, and subsequently one or more infected ones. It is also disclosed to take the degree of infection into account in the sequence.

The known method and device have a number of drawbacks. For example, making the sequence of treating the teats, such as cleaning, variable, is a laborious process. Additionally, variation in the sequence may cause unrest with the treated animals. It is also a disadvantage that the known method and device actually only make use of the health condition at the previous treatment. If that condition after that previous treatment, for example 12 hours ago, has changed, it may indeed be the most infected teat that is cleaned first. Furthermore, the quarters are in principle independent parts of an udder, and consequently in principle different infections may occur in different quarters. The known device and method are not able thus to prevent cross-infection.

In practice, there appears to be a need for a method of the type mentioned in the preamble, which obviates at least partially the drawbacks attached to the state of the art, and which, in particular, enables a simpler and more hygienic teat cleaning.

This object is achieved by the invention by means of the method according to claim 1.

The method according to the invention does not only have the advantage of a fixed sequence which is not confusing for the animals. Disinfection after cleaning of an infected teat also appears better to prevent a cross-infection, or intensification of an infection. A great additional advantage is that this method can directly take a determined health condition into account. For, in the method according to the invention, it is possible to disinfect immediately after an infection has been determined. This makes it possible also to take into account a health condition which has changed since the previous teat cleaning. It should be noted that the invention is aimed at preventing further infection, but has no further influence on the health condition of the animal, because only the cleaning component is disinfected, and not, for example, the teat. Moreover, it should be noted here that the terms "teat" and "quarter" should be considered as synonyms in the context of this invention, in particular with respect to cleaning and/or health condition, unless otherwise stated in the context. For example, the cleaning of a teat will also comprise the cleaning of the associated part of the udder, although this need not be the case. The teat cleaning device is provided with a teat health determination device, and the step of determining the health condition of the teats is performed by the teat health determination device. This makes it possible to make use very quickly of the found information about the teat health. An example of a teat health determination device is a quarter-dependent milk conductivity meter which measures the electric conductivity of quarter milk. If that value becomes too high, this is an indication of an infection, such as mastitis. Other possibilities, such as a cell count meter, a flock counter, a (teat)temperature meter, etc., are applicable as well. It is thus possible to take the determined health condition into account already at a next milking, such as a few hours later, of course automatically whenever possible.

Advantageous embodiments are described in the dependent claims and in the hereafter following detailed description.

In an embodiment, the control device is provided with information about said health condition on the basis of external measurements, in particular from a milking device or a veterinary medicine laboratory. It is thus possible to obtain the information about the health condition and to supply same to the control device, in an efficient and very reliable manner. In an extremely advantageous embodiment, the teat cleaning device comprises a teat cup which is arranged to clean the teats successively, and also to collect foremilk and to analyse same by means of a teat health determination device. It is thus possible, at a determined (new) infection, to take that new result immediately into account, which provides an extremely up-to-date method.

Advantageously, cleaning liquid is used at the teat cleaning, and the teat health determination device is arranged to analyse the used cleaning liquid. In the case of such an analysis may be taken into account the same manners as at the analysis of milk, namely for example the conductivity, the occurrence of cells, flocks, etc. Also in this manner a real-time adaptation of the method is possible by immediate disinfection after a new determined infection. In an efficient embodiment, after the teat cleaning, the teat is dried with the aid of a teat drying device, such as a blowing device or a cloth, provided on a controllable robot arm, if desired.

The disinfection may take place in any desired manner, such as drenching in disinfecting liquid, covering with disinfecting powder, exposing to UVC-radiation, ozone, etc.

The invention also relates to a teat cleaning device for the method according to the invention. The invention further relates to an automatic milking device comprising a teat cleaning device according to the invention. In particular, the invention provides an automatic teat cleaning device comprising a teat cleaning tool disposed on a controllable robot arm, which teat cleaning tool is arranged to clean teats of a dairy animal, and a control device which is arranged to control the teat cleaning tool and the robot arm, wherein the control device is further arranged to receive and process teat health information comprising information about which teat/teats has/have a contagious infection, which is characterized in that the control device is arranged to clean the teats in a fixed sequence, and in that the teat cleaning device comprises a teat cleaning tool disinfection device, further comprising a teat health determination device which is arranged to determine the teat health information and to supply same to the control device, wherein the control device is arranged to disinfect the teat cleaning tool with the aid of the teat cleaning tool disinfection device immediately after cleaning of a teat which has a contagious infection according to the teat health information. This device has for the greater part the same advantages as the method according to the invention, which advantages will therefore not be indicated here again. Moreover, there are provided special embodiments which have their particularities in common with some particular embodiments of the method according to the invention.

The teat cleaning tool may, for example, comprise a cleaning cup which is capable of being applied to a teat and of cleaning the teat, and/or an associated part of the udder, in particular but not exclusively by means of a sprayer for cleaning liquid. The cleaning cup may advantageously extract foremilk, and more advantageously analyse this foremilk or used cleaning liquid.

In another embodiment, the teat cleaning tool comprises a brush, advantageously a plurality of brushes which, during use, are disposed on both sides of the teat, and preferably rotatably, for mechanical removal of dirt. In this case, the teat cleaning tool may additionally be provided with a spraying device.

The above-mentioned embodiments, as well as other possible embodiments of the teat cleaning tool, may moreover be arranged to stimulate and/or massage a teat. For this purpose, a cleaning cup may for example comprise a teat cup liner with pulsator, known per se, while the brushes may for example be controlled in a proper manner by a provided control device.

It is obvious that all embodiments mentioned in this preamble may comprise additional components which, however, will not be described here for reasons of efficiency. The automatic milking device comprises for example a controllable robot arm, a teat detection device, etc. The person skilled in the art will be able to complete these details himself.

The invention will be explained hereinafter in more detail with reference to the drawing which shows in its sole figure in a schematic side view a non-limiting embodiment of the automatic teat cleaning device according to the invention.

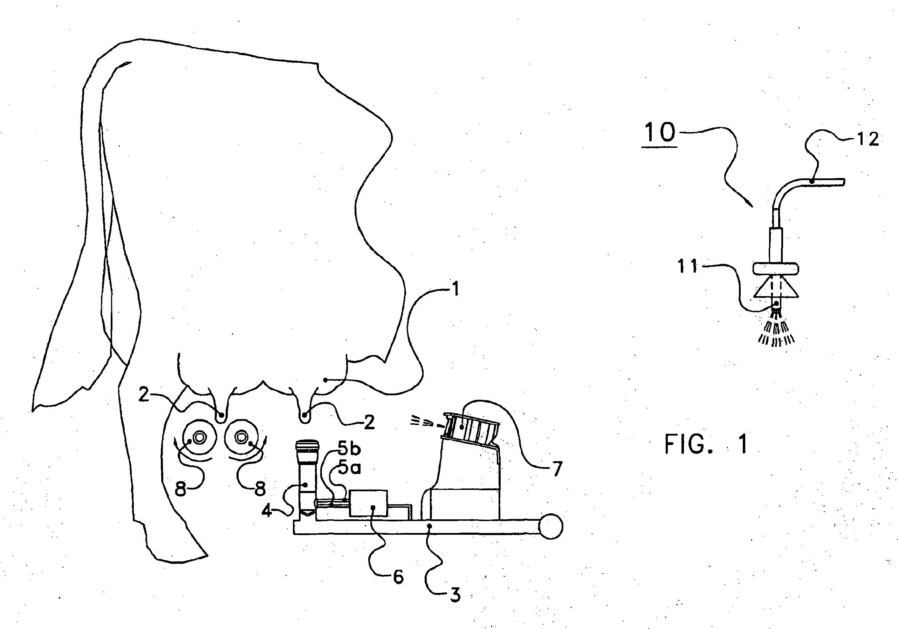

In figure 1 is denoted by 1 an udder with teats 2. On a robot arm 3 are provided a teat cup 4 with a liquid supply line 5a and a liquid discharge line 5b and an analysis device 6. A teat detection device is denoted by 7, while two rotating brushes are denoted by 8.

At a distance is shown a disinfection device 10 comprising a sprayer 11 and a liquid supply line 12.

Here, the udder 1 is shown so as to have two teats 2, for example the right front and rear teats of a cow. Of course, other dairy animals may have a different number of teats, such as two in the case of a goat, or possibly three or five in the case of treated or deviating cows.

The teat cup 4 can be applied to a teat 2 by the robot arm 3, with the aid of the teat detection device 7 and under the control of a non-shown control device. According to the invention, the sequence of applying is fixed, here for example right front followed by right rear, and then left rear and left front, or whatever other sequence. This sequence has been recorded in the control device and may be changed in particular cases, such as when a teat is removed after an illness. It should be noted that the sequence according to the invention is not modified on the basis of a condition of teat infection.

When the teat cup 4 has been applied to the teat 2, the teat 2 can be cleaned. In this case, cleaning liquid can be supplied via the line 5a. Used liquid can be discharged via the line 5b. This may also be foremilk, if the teat cup 4 is used for stimulating the teat 2, with the aid of an incorporated liner and pulsator (not shown). Furthermore, the device is optionally provided with an analysis device 6, for analysing the liquid, either milk, or cleaning liquid, etc. The device 6 comprises, for example, a conductivity meter or a cell meter. By means of the signal from the analysis device it can be determined whether the relevant teat 2 has a contagious infection. If this is found to be the case, the teat cup 4 will be moved, together with the robot arm 3, to the disinfection device 10 in order to be disinfected there. It should be noted that in many countries it is not allowed to apply disinfecting means on the teat prior to the milking. For auxiliary means themselves, which can of course be cleaned, this does not apply or at least to a much lesser limiting extent.

By means of the shown device the method according to the invention can be performed. This method comprises cleaning of the teats 2 in a fixed sequence, wherein the teat cup 4 or the like is disinfected after an infected teat has been cleaned.

The shown brushes 8, which are able to rotate in the shown arrow direction, are an alternative teat cleaning device, of course disposed on a controllable support, such as a robot arm.

As indicated, the analysis device 6 is optional. Alternatively or additionally, it is possible to enter health information, in particular with respect to the condition of infection of the teats 2, in the control device. It is thus also possible to determine beforehand, on the basis of that information, to disinfect the tool 4, 8 after certain teats have been cleaned. Neither shown, and optional, is a teat drying device, in the form of a hot-air drying device or the like.

The illustrated embodiments are by no means intended to be limiting. The scope of protection of the invention is determined by the appended claims.

## Claims

1. Method of cleaning teats of a dairy animal by means of an automatic teat cleaning device controllable by a control device, wherein each of the teats is successively cleaned by means of the teat cleaning device, and wherein a health condition of each of the teats is determined, in particular whether a teat has a contagious infection,
**characterized in that** the teats are cleaned in a fixed sequence, and **in that**, after a teat has been cleaned of which it has been determined that it has a contagious infection, immediately at least a part of the cleaning device that has come into contact with the infected teat is disinfected, wherein the teat cleaning device is provided with a teat health determination device, and wherein the step of determining the health condition of the teats is performed by the teat health determination device.

2. Method according to claim 1, wherein the control device is provided with information about said health condition on the basis of external measurements, in particular from a milking device or a veterinary medicine laboratory.

3. Automatic teat cleaning device comprising a teat cleaning tool disposed on a controllable robot arm, which teat cleaning tool is arranged to clean teats of a dairy animal, and a control device which is arranged to control the teat cleaning tool and the robot arm, wherein the control device is further arranged to receive and process teat health information comprising information about which teat/teats has/have a contagious infection,
**characterized in that** the control device is arranged to clean the teats in a fixed sequence, and **in that** the teat cleaning device comprises a teat cleaning tool disinfection device, further comprising a teat health determination device which is arranged to determine the teat health information and to supply same to the control device, wherein the control device is arranged to disinfect the teat cleaning tool with the aid of the teat cleaning tool disinfection device immediately after cleaning of a teat which has a contagious infection according to the teat health information.

4. Teat cleaning device according to claim 3, wherein the teat health determination device comprises a milk property measuring device, in particular a milk conductivity meter, a milk colour meter or a milk frock counter.

5. Teat cleaning device according to one of claims 3-4, wherein the teat cleaning tool comprises at least one of a teat cup, a sprayer and a brush.

6. Automatic milking device comprising a teat cleaning device according to one of claims 3-5.

## Patentansprüche

1. Verfahren zum Reinigen von Zitzen eines Milchtieres mittels einer automatischen Zitzenreinigungsvorrichtung, welche durch eine Steuervorrichtung steuerbar ist, wobei jede der Zitzen nacheinander mittels der Zitzenreinigungsvorrichtung gereinigt wird und wobei der Gesundheitszustand jeder der Zitzen bestimmt wird, insbesondere ob eine Zitze eine ansteckende Infektion aufweist,
**dadurch gekennzeichnet, dass** die Zitzen in einer feststehenden Reihenfolge gereinigt werden, und dass, nachdem eine Zitze gereinigt worden ist, bei der bestimmt wurde, dass sie eine ansteckende Infektion aufweist, wenigstens ein Teil der Reinigungsvorrichtung, welcher in Kontakt mit der infizierten Zitze gekommen ist, unmittelbar desinfiziert wird,
wobei die Zitzenreinigungsvorrichtung mit einer Zitzengesundheitsbestimmungsvorrichtung versehen ist und wobei der Schritt des Bestimmens des Gesundheitszustands der Zitzen durch die Zitzengesundheitsbestimmungsvorrichtung ausgeführt wird.

2. Verfahren nach Anspruch 1, wobei die Steuervorrichtung mit Information über den Gesundheitszustand auf der Grundlage externer Messungen, insbesondere von einer Melkvorrichtung oder einem veterinärmedizinischen Labor, versorgt wird.

3. Automatische Zitzenreinigungsvorrichtung, umfassend ein Zitzenreinigungswerkzeug, welches auf einem steuerbaren Roboterarm angeordnet ist, wobei das Zitzenreinigungswerkzeug so angeordnet ist, um die Zitzen eines Milchtieres zu reinigen, und eine Steuervorrichtung, welche angeordnet ist, um das Zitzenreinigungswerkzeug und den Roboterarm zu steuern, wobei die Steuervorrichtung des Weiteren angeordnet ist, um Zitzengesundheitsinformationen, welche Informationen darüber umfassen, welche Zitze/Zitzen eine ansteckende Infektion aufweist/aufweisen, zu empfangen und zu verarbeiten,
**dadurch gekennzeichnet, dass** die Steuervorrichtung angeordnet ist, um die Zitzen in einer feststehenden Reihenfolge zu reinigen, und dass die Zitzenreinigungsvorrichtung eine Desinfektionsvorrichtung für das Zitzenreinigungswerkzeug umfasst, des Weiteren umfassend eine Zitzengesundheitsbestimmungsvorrichtung, welche angeordnet ist, um die Zitzengesundheitsinformation zu ermitteln und selbige der Steuervorrichtung zuzuleiten, wobei die Steuervorrichtung angeordnet ist, um das Zitzenreinigungswerkzeug mit Hilfe der Desinfektionsvorrichtung für das Zitzenreinigungswerkzeug unmittelbar nach dem Reinigen einer Zitze zu desinfizieren, welche eine ansteckende Infektion gemäß der Zitzengesundheitsinformation aufweist.

4. Zitzenreinigungsvorrichtung nach Anspruch 3, wobei die Zitzengesundheitsbestimmungsvorrichtung eine Milcheigenschaftsmessvorrichtung, insbesondere ein Milchleitfähigkeitsmessgerät, ein Milchfarbmessgerät oder einen Milchdurchflusszähler, umfasst.

5. Zitzenreinigungsvorrichtung nach einem der Ansprüche 3 bis 4, wobei das Zitzenreinigungswerkzeug einen Zitzenbecher, einen Sprüher und/oder eine Bürste umfasst.

6. Automatische Melkvorrichtung, umfassend eine Zitzenreinigungsvorrichtung nach einem der Ansprüche 3 bis 5.

## Revendications

1. Procédé de nettoyage de trayons d'un animal laitier au moyen d'un dispositif de nettoyage automatique de trayons contrôlable par un dispositif de contrôle, dans lequel chacun des trayons est successivement nettoyé au moyen du dispositif de nettoyage de trayons, et dans lequel un état de santé de chacun des trayons est déterminé, en particulier si un trayon présente une infection contagieuse,
**caractérisé en ce que** les trayons sont nettoyés selon une séquence déterminée, et **en ce que**, une fois qu'un trayon a été nettoyé et qu'il est déterminé qu'il présente une infection contagieuse, au moins une partie du dispositif de nettoyage qui est venu en contact avec le trayon infecté est immédiatement désinfectée, le dispositif de nettoyage de trayons étant pourvu d'un dispositif de détermination de la santé des trayons, et l'étape de détermination de l'état de santé des trayons étant effectuée par le dispositif de détermination de la santé des trayons.

2. Procédé selon la revendication 1, dans lequel le dispositif de contrôle reçoit des informations sur ledit état de santé sur la base de mesures externes, en provenance en particulier d'un dispositif de traite ou d'un laboratoire de médecine vétérinaire.

3. Dispositif de nettoyage automatique de trayons comprenant un outil de nettoyage de trayons disposé sur un bras de robot contrôlable, lequel outil de nettoyage de trayons est conçu pour nettoyer les trayons d'un animal laitier, et un dispositif de contrôle qui est conçu pour contrôler l'outil de nettoyage de trayons et le bras de robot, dans lequel le dispositif de contrôle est en outre conçu pour recevoir et traiter des informations de santé de trayons comprenant des informations indiquant le/les trayon(s) présentant une infection contagieuse,
**caractérisé en ce que** le dispositif de contrôle est conçu pour nettoyer les trayons selon une séquence déterminée, et **en ce que** le dispositif de nettoyage de trayons comprend un dispositif de désinfection d'outil de nettoyage de trayons, comprenant en outre un dispositif de détermination de la santé des trayons qui est conçu pour déterminer les informations de santé des trayons et les fournir au dispositif de contrôle, le dispositif de contrôle étant conçu pour désinfecter l'outil de nettoyage de trayons à l'aide du dispositif de désinfection d'outil de nettoyage de trayons immédiatement après le nettoyage d'un trayon qui présente une infection contagieuse selon les informations de santé des trayons.

4. Dispositif de nettoyage de trayons selon la revendication 3, dans lequel le dispositif de détermination de la santé des trayons comprend un dispositif de mesure des propriétés du lait, en particulier, un conductivimètre du lait, un chromatomètre du lait ou un compteur de troupeau laitier.

5. Dispositif de nettoyage de trayons selon l'une des revendications 3 et 4, dans lequel l'outil de nettoyage de trayons comprend au moins un élément parmi un gobelet trayeur, un pulvérisateur et une brosse.

6. Dispositif de traite automatique comprenant un dispositif de nettoyage de trayons selon l'une des revendications 3 à 5.
